(19) Europäisches Patentamt / European Patent Office / Office européen des brevets

(11) **EP 3 938 702 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **20720396.9**

(22) Anmeldetag: **15.04.2020**

(51) Internationale Patentklassifikation (IPC):
*F21S 4/22* (2016.01)  *F21S 4/28* (2016.01)
*F21V 31/04* (2006.01)  *B60Q 3/54* (2017.01)
*B60Q 3/78* (2017.01)  *F21Y 103/10* (2016.01)
*F21Y 105/12* (2016.01)  *F21Y 115/10* (2016.01)
*F21W 104/00* (2018.01)

(52) Gemeinsame Patentklassifikation (CPC):
**F21V 31/04; B60Q 3/54; B60Q 3/78; F21S 4/22; F21S 4/28;** F21W 2104/00; F21Y 2103/10; F21Y 2105/12; F21Y 2115/10

(86) Internationale Anmeldenummer:
**PCT/EP2020/060553**

(87) Internationale Veröffentlichungsnummer:
**WO 2020/224923 (12.11.2020 Gazette 2020/46)**

(54) **GLEICHMÄSSIG BELEUCHTBARES ZIERTEIL**

UNIFORMLY ILLUMINABLE DECORATIVE PART

PIÈCE DÉCORATIVE POUVANT ÊTRE ÉCLAIRÉE DE MANIÈRE RÉGULIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2019 DE 102019111542**

(43) Veröffentlichungstag der Anmeldung:
**19.01.2022 Patentblatt 2022/03**

(73) Patentinhaber: **HIB Trim Part Solutions GmbH**
**76646 Bruchsal (DE)**

(72) Erfinder: **YU, Zhikai**
**76646 Bruchsal (DE)**

(74) Vertreter: **Staeger & Sperling Partnerschaftsgesellschaft mbB Sonnenstraße 19 80331 München (DE)**

(56) Entgegenhaltungen:
DE-A1- 10 343 878    US-A1- 2009 244 902
US-A1- 2011 063 838    US-A1- 2011 156 067
US-A1- 2014 307 434    US-A1- 2018 017 231

## Beschreibung

Die Erfindung betrifft ein beleuchtbares Zierteil insbesondere zur Anwendung im Automobilbereich, wobei das Zierteil im Wesentlichen eine Lichtleitschicht und zumindest ein Lichtband mit Leuchtmitteln umfasst und wobei das Zierteil auf seiner Sichtseite gleichmäßig bzw. homogen durch die Leuchtmittel des zumindest einen Lichtbands beleuchtbar ist.

Im Stand der Technik ist bereits eine Vielzahl von beleuchtbaren Zierteilen bekannt. Diese Zierteile beruhen meist auf dem Prinzip, dass eine Lichtleitschicht seitlich von einem Lichtband angestrahlt wird, welches an einem Rand der Lichtleitschicht angeordnet ist. Dadurch, dass das Lichtband seitlich an einem Rand der Lichtleitschicht angeordnet ist, kann die Form der Lichtleitschicht nicht oder nur bedingt angepasst werden, da die zu dem Lichtband gewandte Seite der Lichtleitschicht nicht verändert werden darf.

Hinzukommt, dass die Lichtleistung am Rand angeordneter Lichtbänder begrenzt ist, so dass ein derart ausgebildetes Zierteil am Rand, an welchem das Lichtband angeordnet ist, heller beleuchtet ist und dunkler wird, je weiter der betrachtete Abschnitt von dem Lichtband weg liegt. Soll dies durch weitere am Rand angeordnete Lichtbänder ausgeglichen werden, wird der Verlauf der Ränder des Zierteils durch die Lichtbänder bestimmt, so dass die Lichtleitschicht nicht mehr zuschneidbar bzw. anpassbar ist. Ferner kann es trotz mehrerer Lichtbänder zu einer inhomogenen Beleuchtung des Zierteils kommen, da insbesondere eine weniger gut beleuchtbare Mitte bzw. weniger gut beleuchtbare Abschnitte des Zierteils dunkler erscheinen können.

Durch die im Stand der Technik bekannten Lösungen kann es in der Lichtleitschicht durch die am Rand oder in der Mitte angeordneten Lichtbändern zu einer inhomogenen Beleuchtung kommen, so dass sich an dem Zierteil dunklere bzw. schlecht beleuchtete Ränder, sogenannte "dark frames", stärker beleuchtete Stellen ("hot spots") und unbeleuchteten Stellen ("dark spots") bilden können.

Generell gilt für die im Stand der Technik bekannten Lösungen zudem, dass diese schlecht auf verschiedene Anwendungen anpassbar sind, da beispielsweise für jede Anwendung ein dafür angepasstes Zierteil hergestellt werden muss, welches eine spezifische Form und spezifische Eigenschaften aufweist.

Verschiedene nachteilhafte Beleuchtungskonzepte insbesondere für Zierteile sind beispielsweise aus den Dokumenten US 2011/156067 A1, US 2014/307434 A1, US 2018/017231 A1, US 2011/063838 A1, DE 103 43 878 A1 und US 2009/244902 A1 bekannt.

Der Erfindung liegt deshalb die Aufgabe zugrunde, die vorgenannten Nachteile zu überwinden und ein gleichmäßig beleuchtbares Zierteil bereitzustellen, welches einfach auf verschiedene Anwendungssituationen anpassbar ist.

Diese Aufgabe wird durch die Merkmalskombination gemäß Patentanspruch 1 gelöst.

Erfindungsgemäß wird ein beleuchtbares Zierteil mit einer Sichtseite und einer der Sichtseite gegenüberliegenden Rückseite vorgeschlagen. Bei einer bestimmungsgemäßen Verwendung ist die Sichtseite des Zierteils insbesondere einem Betrachter zugewandt und die Rückseite an dem Zierteil von dem Betrachter abgewandt. Das Zierteil umfasst eine transparente Lichtleitschicht sowie zumindest ein Lichtband, wobei sich die Lichtleitschicht flächig von einer ersten Seite zu einer gegenüberliegenden zweiten Seite erstreckt und sich das zumindest eine Lichtband zwischen der ersten Seite und der zweiten Seite von einer dritten Seite zu einer gegenüberliegenden vierten Seite der Lichtleitschicht erstreckt. Vorzugsweise weist die Lichtleitschicht somit eine zu der Sichtseite des Zierteils gewandte Oberseite, eine zu der Rückseite gewandte Unterseite sowie die vier insbesondere in einer Ebene liegenden vier Seiten eins bis vier auf, welche sich paarweise gegenüberliegen. Ferner sind die Paare von Seiten vorzugsweise orthogonal zueinander, so dass sie im Wesentlichen ein Rechteck aufspannen, in welchem die Form der Lichtleitschicht bestimmt ist. Obgleich die vier Seiten ein Rechteck aufspannen, wird die Form des Zierteils nicht auf ein Rechteck begrenzt. Das Zierteil kann beispielsweise eine aus der Draufsicht runde Form aufweisen oder frei geformt sein, wobei jeweils Seitenflächen oder Abschnitte von Seitenflächen den vier Seiten zugewandt sind. Das zumindest eine Lichtband weist zudem jeweils eine erste Vielzahl von Leuchtmitteln und eine zweite Vielzahl von Leuchtmitteln auf, wobei die Leuchtmittel der ersten Vielzahl von Leuchtmitteln ausgebildet sind, Licht in Richtung der ersten Seite der Lichtleitschicht zu emittieren, und die Leuchtmittel der zweiten Vielzahl von Leuchtmitteln ausgebildet sind, Licht in Richtung der zweiten Seite der Lichtleitschicht zu emittieren. Das Lichtband ist an einer zu der Rückseite des Zierteils weisenden Unterseite der Lichtleitschicht angeordnet und erstreckt sich zumindest mit den Leuchtmitteln zu der Sichtseite des Zierteils hin in die Lichtleitschicht hinein. Das Lichtband kann alternativ auch vollständig in der Lichtleitschicht aufgenommen und in einem Querschnitt gesehen von der Lichtleitschicht eingeschlossen sein. Die Leuchtmittel der ersten Vielzahl von Leuchtmitteln sind jeweils zumindest teilweise in einem Lichtkegel des von einem der Leuchtmittel der zweiten Vielzahl von Leuchtmitteln in Richtung der zweiten Seite emittierbaren Lichts und die Leuchtmittel der zweiten Vielzahl von Leuchtmitteln jeweils zumindest teilweise in einem Lichtkegel des von einem der Leuchtmittel der ersten Vielzahl von Leuchtmitteln in Richtung der ersten Seite emittierbaren Lichts angeordnet, wodurch sich insbesondere ergibt, dass das Zierteil im Bereich eines jeweiligen Lichtband von den Leuchtmitteln des jeweiligen Lichtbands beleuchtbar ist.

Vorteilhaft ist zudem auch, wenn eine zu der Rückseite des Zierteils gerichtete Unterseite des Lichtbands bündig mit einer zu der Rückseite des Zierteils gerichteten Unterseite der Lichtleitschicht abschließt, so dass das Lichtband in einem Querschnitt gesehen zu der Sichtseite des Zierteils hin und zu der ersten und zweiten Seite der Lichtleitschicht von der Lichtleitschicht umschlossen ist.

Die zu der Sichtseite gewandte Oberseite der Lichtleitschicht ist vorzugsweise eine homogene Fläche und wird insbesondere durch die Leuchtmittel des Lichtbandes nicht durchbrochen, wobei eine zu der Sichtseite gewandte Oberseite des Lichtbandes einen vorbestimmten Abstand zu der Oberseite der Lichtleitschicht aufweist, so dass die Lichtleitschicht auch im Bereich der Leuchtmittel des Lichtbandes im Wesentlichen gleichmäßig beleuchtbar ist.

Ist in einem Zierteil mehr als ein Lichtband vorgesehen, können die Lichtbänder in gleichmäßigen Abständen, parallel zueinander oder in einem vorbestimmten Muster angeordnet sein. Ferner folgt das Lichtband bzw. jedes der Lichtbänder einem vorbestimmten Pfad in dem Zierteil, welcher aus einer Draufsicht von der Sichtseite aus insbesondere geradlinig ist, jedoch auch wellenförmig oder gebogen verlaufen kann.

Vorzugsweise ist die Länge des Zierteils von der dritten zu der vierten Seite der Lichtleitschicht, also entlang des oder der Lichtbänder und die Breite des Zierteils von der ersten zu der zweiten Seite der Lichtleitschicht bestimmt. Die Länge des Zierteils ist beliebig wählbar und insbesondere abhängig von der Länge der Lichtbänder, welche jedoch im Wesentlichen frei wählbar ist. Die Breite des Zierteils ist bei den im Stand der Technik bekannten Lösungen meist begrenzt. Durch die Verwendung mehrerer Lichtbänder, welche vorzugsweise parallel und in Breitenrichtung des Zierteils beabstandet zueinander angeordnet sind, kann jedoch auch die Breite eines erfindungsgemäßen Zierteils im Wesentlichen frei bestimmt werden, da für breitere Varianten des Zierteils mehrere Lichtbänder verwendet werden können.

Eine vorteilhafte Variante des Zierteils sieht vor, dass die Leuchtmittel der ersten und der zweiten Vielzahl von Leuchtmittel alternierend zueinander angeordnet sind, so dass entlang des Lichtbandes von der dritten zu der vierten Seite der Lichtleitschicht auf ein Leuchtmittel der ersten Vielzahl von Leuchtmitteln jeweils ein Leuchtmittel der zweiten Vielzahl von Leuchtmitteln und umgekehrt folgt. Ferner sind die Leuchtmittel der ersten Vielzahl von Leuchtmitteln entlang eines ersten Pfades und die Leuchtmittel der zweiten Vielzahl von Leuchtmitteln entlang eines zweiten Pfades angeordnet, welche entlang ihrer gesamten Erstreckung vorzugsweise in Breitenrichtung des Zierteils zueinander beabstandet sind. Verläuft das Lichtleitband geradlinig, sind die Emissionsachsen, entlang derer die Leuchtmittel ihr Licht zu der ersten bzw. zweiten Seite emittieren, somit parallel und die von den Leuchtmitteln erzeugten Lichtkegel miteinander verschränkt. Die Lichtkegel in Längsrichtung des Lichtbandes aufeinander folgender Leuchtmittel können sich zudem zumindest im Bereich des Lichtbandes überlappen.

Um das Zierteil mit seiner Rückseite beispielsweise auch auf eine Freiformfläche eines Trägers oder eines Untergrundes aufbringen zu können, ist bei einer vorteilhaften Variante zudem vorgesehen, dass die Lichtleitschicht elastisch ist, so dass sich diese der Freiformfläche anpassen kann.

Abhängig von den Anforderungen an das herzustellende Zierteil und insbesondere ob es erforderlich ist, dass sich die Lichtleitschicht an eine Freiformfläche anpassen kann oder ob die Lichtleitschicht auf einer ebenen Fläche angeordnet wird, kann die Lichtleitschicht in einer weiteren vorteilhaften Weiterbildungsvariante durch entsprechende Materialwahl steif oder flexibel oder auch flexibel und elastisch ausgebildet werden.

Eine vorteilhafte Ausführungsform des Zierteil sieht ferner vor, dass das Lichtband in eine Vielzahl von an vorbestimmten Trennstellen voneinander trennbaren Abschnitten unterteilt ist, welche jeweils einen vorbestimmten Teil der Leuchtmittel der ersten Vielzahl von Leuchtmitteln und der zweiten Vielzahl von Leuchtmitteln aufweisen. Insbesondere werden die Trennstellen dadurch bestimmt, dass elektrische Kontakte bzw. Leiterbahnen zur elektrischen Versorgung und Steuerung der Leuchtmittel an den Trennstellen durchtrennbar sind, ohne, dass die Leuchtmittel selbst oder andere von dem Lichtband umfasste elektrische Komponenten beschädigt werden. Ein Abschnitt des Lichtbandes kann auch eine vorbestimmte Anzahl von 0 Leuchtmitteln umfassen, wobei ein Abschnitt vorzugsweise eine gerade Anzahl von Leuchtmitteln bzw. genauso viele Leuchtmittel der ersten Vielzahl von Leuchtmitteln wie Leuchtmittel der zweiten Vielzahl von Leuchtmitteln aufweist. Darüber hinaus weisen alle voneinander trennbaren Abschnitte vorzugsweise die gleiche vorbestimmte Anzahl von Leuchtmitteln auf.

Ferner kann vorteilhaft vorgesehen sein, dass die Lichtleitschicht durch ein Schneidwerkzeug, wie beispielsweise eine Schere oder einen Schneidkeil, spanlos schneid- bzw. trennbar ist, so dass eine aus der Aufsicht von der Sichtseite aus gesehene Form des Zierteils im Wesentlichen frei wählbar ist und lediglich durch Anschlusskontakte eines der Lichtbänder und die vorbestimmten Trennstellen der Lichtbänder eingeschränkt ist. Die aus der Auf- bzw. Draufsicht gesehene Form des Zierteils kann dadurch auch nach der Herstellung des Zierteils geändert werden, so dass das Zierteil auf verschiedene Anwendungen anpassbar ist, ohne die durch die Leuchtmittel bestimmte Beleuchtbarkeit zu beeinflussen.

Vorzugsweise ist ferner vorgesehen, dass das Zierteil zuschneidbar und seine Form von der Sichtseite aus gesehen im Wesentlichen frei wählbar ist, wobei die Form im Bereich der Lichtbänder von den Trennstellen bestimmt wird. Darüber hinaus können mehrere nebeneinander angeordnete Zierteile auch in eine Längsrichtung entlang der Längsrichtung der Lichtbänder durch eine serielle Kontaktieren der Lichtbänder der Zierteile miteinander erweitert werden. In eine Breitenrichtung der Zierteile orthogonal zu der Längsrichtung der Lichtbänder können die Zierteile durch das nebeneinander anordnen der Zierteile erweitert werden, wodurch sich eine vorteilhafte Zuschneid- bzw. Trimmbarkeit und Erweiterbarkeit des Zierteils ergibt.

Als Träger und zur elektrischen Kontaktierung der Leuchtmittel weist das Lichtband bei einer vorteilhaften Ausgestaltung des Zierteils zudem ein Trägerband auf, auf welchem die Leuchtmittel angeordnet und elektrisch kontaktiert sind. Das Trägerband ist zudem elastisch, so dass es sich der vorzugweise ebenfalls elastischen Lichtleitschicht anpassen kann. Zur elektrischen Kontaktierung und Steuerung der Leuchtmittel können auf dem Trägerband Leiterbahnen und weitere elektrische Komponenten, wie Widerstände, angeordnet oder aufgedruckt sein.

Abhängig von den Anforderungen an das herzustellende Zierteil und insbesondere ob es erforderlich ist, dass sich das Trägerband an eine Freiformfläche anpassen kann oder ob das Trägerband auf einer ebenen Fläche angeordnet wird, kann das Trägerband in einer weiteren vorteilhaften Weiterbildungsvariante durch entsprechende Materialwahl steif oder flexibel oder auch flexibel und elastisch ausgebildet werden.

Die Leuchtmittel sind bei einer ebenfalls vorteilhaften Ausgestaltung jeweils aus mehreren LEDs gebildet. Alternativ sind die Leuchtmittel jeweils eine LED. Die LEDs können einfarbig oder mehrfarbig als RGB- bzw. RGBW-LEDs ausgebildet sein. Vorzugsweise werden LEDs verwendet, welche Licht seitlich, also in Richtung der ersten oder zweiten Seite der Lichtleitschicht emittieren. Darüber hinaus kann die Lichtfarbe und/oder Lichtintensität der Leuchtmittel abhängig von einer jeweiligen Anwendung anpassbar sein, was beispielsweise von der zu beleuchtenden Fläche beeinflusst wird. Als LEDs werden besonders bevorzugt SMD-LEDs verwendet. LEDs oder die Licht emittierenden Elemente können auch außerhalb der Lichtleitschicht angeordnet sein und das durch sie emittierte Licht durch Lichtleiter oder Reflektoren in die Lichtleitschicht umgelenkt werden, so dass die Leuchtmittel durch die Lichtleiter oder Reflektoren gebildet werden.

Um zu verhindern, dass sich im Bereich des Lichtbandes "hot spots" oder "dark spots" bilden, sieht eine vorteilhafte Variante des Zierteil zudem vor, dass das Lichtband eine Ausgleichsschicht zur Homogenisierung der Lichtintensität des durch die Leuchtmittel emittierten Lichts aufweist. Die Ausgleichsschicht kann einteilig als eine durchgehende Schicht oder mehrteilig als voneinander getrennte Schichtabschnitte ausgebildet sein. Die Ausgleichsschicht sieht in den Bereichen der Lichtkegel der Leuchtmittel der ersten und zweiten Vielzahl von Leuchtmitteln jeweils Abschnitte mit unterschiedlichen Reflexionseigenschaften und/oder Absorptionseigenschaften vor, durch welche das durch die Leuchtmittel emittierte Licht vorzugsweise homogen in die Lichtleitschicht und zu der Sichtseite der Zierteils hin geleitet bzw. homogenisiert wird. Vorzugsweise ist die Ausgleichsschicht unmittelbar auf dem Trägerband des Lichtbandes vorgesehen, wobei die Leuchtmittel zwischen den Abschnitten der Ausgleichsschicht auf dem Trägerband oder durch die Ausgleichsschicht mit dem Trägerband angeordnet und/oder verbunden sein können.

Hierbei ist ferner vorzugweise vorgesehen, dass jeder von jedem der Leuchtmittel emittierbaren Lichtkegel um eine Emissionsachse des jeweiligen Leuchtmittels symmetrisch ist und ein einem Leuchtmittel zugeordneter Bereich der Ausgleichsschicht seine Dichte und/oder Farbe von der Emissionsachse zu außenliegenden Rändern des jeweiligen Lichtkegels variiert, so dass der Bereich der Ausgleichsschicht von der Emissionsachse zu seinem Rand hin weniger durch das Leuchtmittel emittiertes Licht absorbiert und/oder mehr reflektiert. Die Variation der Eigenschaften der Ausgleichsschicht von der Emissionsachse nach außen kann schrittweise, fließend oder einem vorbestimmten Muster folgend erfolgen.

Darüber hinaus oder alternativ dazu ist vorzugsweise vorgesehen, dass jeder von jedem der Leuchtmittel emittierbaren Lichtkegel entlang einer Emissionsachse des jeweiligen Leuchtmittels ausgestrahlt wird und ein einem Leuchtmittel zugeordneter Bereich der Ausgleichsschicht bezüglich seiner Dichte und/oder Farbe entlang der Emissionsachse variiert, so dass die Ausgleichsschicht unmittelbar angrenzend an das Leuchtmittel entlang der Emissionsachse zu einem von dem Leuchtmittel beabstandeten Bereich der Ausgleichsschicht weniger durch das Leuchtmittel emittiertes Licht absorbiert und/oder mehr reflektiert. Wie auch bei der Variation der Eigenschaften ausgehend von der jeweiligen Emissionsachse zu den seitlichen Rändern des jeweiligen Lichtkegels hin, ist für die Variation der Eigenschaften entlang der Emissionsachsen bzw. der jeweiligen Emissionsachse vorgesehen, dass die Variation der Eigenschaften der Ausgleichsschicht entlang der Emissionsachse schrittweise, fließend oder einem vorbestimmten Muster folgend erfolgen kann.

Um die Beleuchtung des Zierteils an der Sichtseite bzw. für einen Betrachter von der Sichtseite aus weiter zu homogenisieren ist bei einer ebenfalls vorteilhaften Variante vorgesehen, dass das Zierteil ferner eine Maskierungsschicht aufweist, die auf einer zu der Sichtseite des Zierteils weisenden Oberseite der Lichtleitschicht an der Lichtleitschicht angeordnet und mit ihr verbunden ist. Die Maskierungsschicht ist ausgebildet, von der Lichtleitschicht auf die Maskierungsschicht treffendes Licht zu absorbieren und zu der Sichtseite des Zierteils hin zu homogenisieren, so dass das Zierteil von seiner Sichtseite aus durch das von der Lichtleitschicht auf die Maskierungsschicht treffende Licht homogen beleuchtbar ist. Durch die Maskierungsschicht wird eine eventuell inhomogene Beleuchtung von der Lichtleitschicht aus weiter homogenisiert, so dass es nicht zu "hot spots" oder "dark spots" kommt bzw. diese durch die Maskierungsschicht zu der Sichtseite hin kaschiert werden. Die Maskierungsschicht ist vorzugweise ebenfalls elastisch ausgebildet.

Das Zierteil weist bei einer ebenfalls vorteilhaften Variante eine Reflexionsschicht auf, wobei die Reflexionsschicht an einer zu der Rückseite des Zierteils weisenden Unterseite der Lichtleitschicht angeordnet ist. Die Reflexionsschicht ist ausgebildet, ein aus der Lichtleitschicht auf sie treffendes Licht zu der Sichtseite des Zierteils hin zu reflektieren. Vorzugsweise ist die Reflexionsschicht als Punktmatrix ausgebildet, deren Dichte und die damit verbundenen Reflexionseigenschaften sich schrittweise, linear oder einem vorbestimmten Muster folgend von den Leuchtmitteln ausgehend mit einer größer werdenden Entfernung von den Leuchtmitteln ändern. Die Reflexionsschicht kann sich über die gesamte Fläche des Zierteils erstrecken, es können jedoch auch Abschnitte und insbesondere die Abschnitte, in welchen die Lichtbänder angeordnet sind, frei bleiben. Die Reflexionsschicht oder die Abschnitte der Reflexionsschicht kann/können unmittelbar an der Unterseite der Lichtleitschicht angeordnet sein, kann/können jedoch auch an einer anderen Schicht und insbesondere an der nachfolgend erläuterten zweiten transparenten Lichtleitschicht angeordnet sein, so dass sie über diese Schicht indirekt an der Unterseite der Lichtleitschicht angeordnet sind.

Abhängig von den Anforderungen an das herzustellende Zierteil und insbesondere ob es erforderlich ist, dass sich die zweite Lichtleitschicht an eine Freiformfläche anpassen kann oder ob die zweite Lichtleitschicht auf einer ebenen Fläche angeordnet wird, kann auch die zweite Lichtleitschicht in einer weiteren vorteilhaften Weiterbildungsvariante durch entsprechende Materialwahl steif oder flexibel oder auch flexibel und elastisch ausgebildet werden.

Um das von den Leuchtmitteln emittierte Licht in der Lichtleitschicht von der Unterseite zu der Oberseite der Lichtleitschicht und somit in Richtung der Sichtseite umzulenken, sieht eine ebenfalls vorteilhafte Ausgestaltungsvariante des Zierteils vor, dass das Zierteil ferner eine zweite transparente Lichtleitschicht aufweist. Die zweite transparente Lichtleitschicht hat einen sich von einem Brechungsindex der transparenten Lichtleitschicht unterscheidenden Brechungsindex, wobei die zweite transparente Lichtleitschicht an einer zu der Rückseite des Zierteils weisenden Unterseite der Lichtleitschicht angeordnet ist. Die zweite Lichtleitschicht kann unmittelbar an der (ersten) Lichtleitschicht angeordnet sein, wobei alternativ auch die Reflexionsschicht zwischen der Lichtleitschicht und der zweiten Lichtleitschicht angeordnet sein kann. Die zweite Lichtleitschicht ist vorzugweise ebenfalls elastisch.

Die Lichtleitschichten können miteinander verschmolzen oder durch ein transparentes Verbindungsmittel miteinander verbunden sein, so dass sich zwischen Ihnen keine Luftschicht oder Lücke bildet. Ein vorzugsweise flüssiges oder festes Verbindungsmittel in einem die Schichten bestimmungsgemäß verbindenden Zustand einen Brechungsindex aufweist, welcher im Wesentlichen dem Brechungsindex der (ersten) Lichtleitschicht oder der zweiten Lichtleitschicht entspricht.

An einem zu der dritten oder vierten Seite der Lichtleitschicht weisenden Endabschnitt des Lichtbandes oder einer zu einer Rückseite des Zierteils weisenden Unterseite des Lichtbandes sind bei einer ebenfalls vorteilhaften Variante des Zierteils elektrische Anschlusskontakte zur elektrischen Versorgung und Steuerung der Leuchtmittel der ersten und zweiten Vielzahl von Leuchtmitteln des Lichtbandes vorgesehen. Es können auch an beiden in Längsrichtung des Lichtbandes gegenüberliegenden Endabschnitten des Lichtbandes Anschlusskontakte vorgesehen sein. Die Anschlusskontakte können zudem auch durch Steckkontakte ausgebildet sein, so dass an den Endabschnitten männliche oder weibliche Steckkontakte vorgesehen sein können. Weist das Zierteil mehr als ein Lichtband auf, kann auch nur ein Teil oder nur ein einzelnes Lichtband Anschlusskontakte aufweisen, wobei die Lichtbänder dann elektrisch miteinander verbunden sind.

Insbesondere wenn die Lichtbänder endseitig Anschlusskontakte aufweisen, ist vorzugsweise vorgesehen, dass der zu der dritten oder vierten Seite der Lichtleitschicht weisende Endabschnitt des Lichtbandes zu der dritten oder vierten Seite hin aus der Lichtleitschicht hervorsteht. Alternativ können die Anschlusskontakte jedoch auch zu der Rückseite hin aus der Lichtleitschicht hervorstehen. Stehen mehrere Endabschnitte mehrerer Lichtbänder aus der Lichtleitschicht hervor, können diese auch zu verschiedenen Seiten hervorstehen, so dass beispielsweise der Endabschnitt eines ersten Lichtbandes zu der dritten Seite und der Endabschnitt eines zweiten Lichtbandes zu der vierten Seite hin hervorsteht.

Um bei der Verwendung mehrerer Lichtbänder weniger oder lediglich ein Lichtband mit Anschlusskontakten vorsehen zu müssen, sieht eine ebenfalls vorteilhafte Variante vor, dass das Zierteil eine Vielzahl von Lichtbändern aufweist, wobei jeweils zumindest zwei Lichtbänder der Vielzahl von Lichtbändern über zumindest eine zwischen den Lichtleitbändern, also von Lichtband zu Lichtband, verlaufende Brückenleitung elektrisch miteinander verbunden sind, so dass die Leuchtmittel der jeweils zumindest zwei Lichtbänder gemeinsam elektrisch versorgbar und steuerbar sind.

Abhängig von den Anforderungen an das herzustellende Zierteil und insbesondere ob es erforderlich ist, dass sich die bzw. eine Brückenleitung an eine Freiformfläche anpassen kann oder ob die Brückenleitung auf einer ebenen Fläche angeordnet wird, kann die Brückenleitung in einer weiteren vorteilhaften Weiterbildungsvariante durch entsprechende Materialwahl steif oder flexibel oder auch flexibel und elastisch ausgebildet werden.

Die Brückenleitung bzw. die Brückenleitungen können integral mit dem Trägerband des Lichtbandes bzw. der Lichtbänder ausgebildet sein oder alternativ zu der Rückseite oder zu der Sichtseite hin, beispielsweise durch Bonding, mit dem Trägerband verbunden sein.

Ferner verläuft die Brückenleitung bzw. verlaufen die Brückenleitung vorzugsweise rückseitig an der Lichtleitschicht, können jedoch auch zumindest teilweise in ihr aufgenommen sein. Die Brückenleitungen können auch durch einzelne, durch die Lichtleitschicht isolierte Drähte gebildet werden. Darüber hinaus kann vorgesehen sein, dass die Brückenleitungen durchtrennbar sind, ohne die Funktion eines über die Anschlusskontakte weiterhin versorgten Lichtbandes zu beeinflussen.

Da alle die Flexibilität, Elastizität und Steifigkeit des Zierteils bestimmenden Schichten bzw. Elemente des Zierteils, also insbesondere die Lichtleitschicht, das Lichtleitband durch sein Trägerband und falls vorhanden die zweite Lichtleitschicht, steif oder flexibel oder auch flexibel und elastisch ausgebildet werden können, und die weiteren Schichten und Elemente, wie insbesondere die Ausgleichsschicht, die Maskierungsschicht und die Reflexionsschicht, diese Eigenschaften im Wesentlichen nicht bestimmen, kann das gesamte Zierteil steif oder flexibel bzw. flexibel und elastisch ausgebildet werden. Vorzugsweise sind die Reflexionsschicht und die Maskierungsschicht, sofern vorhanden, auf jeweils zumindest eine benachbarte Lichtleitschicht aufgedruckt. Die Ausgleichsschicht ist darüber hinaus vorzugsweise auf das Trägerband aufgedruckt oder das Trägerband mit der Ausgleichsschicht beschichtet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1 ein Zierteil aus einer Aufsicht von der Sichtseite aus;

Fig. 2a bis d Varianten eines Zierteils aus einer Aufsicht;

Fig. 3 abschnittweise dargestelltes Lichtband;

Fig. 4a bis c jeweils eine Teilansicht einer Variante eines Zierteils im Querschnitt;

Fig. 5 Ausgleichsschicht eines Lichtbandes in einer Aufsicht;

Fig. 6a bis d Varianten eines Zierteils mit Brückenleitungen aus einer Aufsicht.

Die Figuren sind beispielhaft schematisch. Gleiche Bezugszeichen in den Figuren weisen auf gleiche funktionale und/oder strukturelle Merkmale hin.

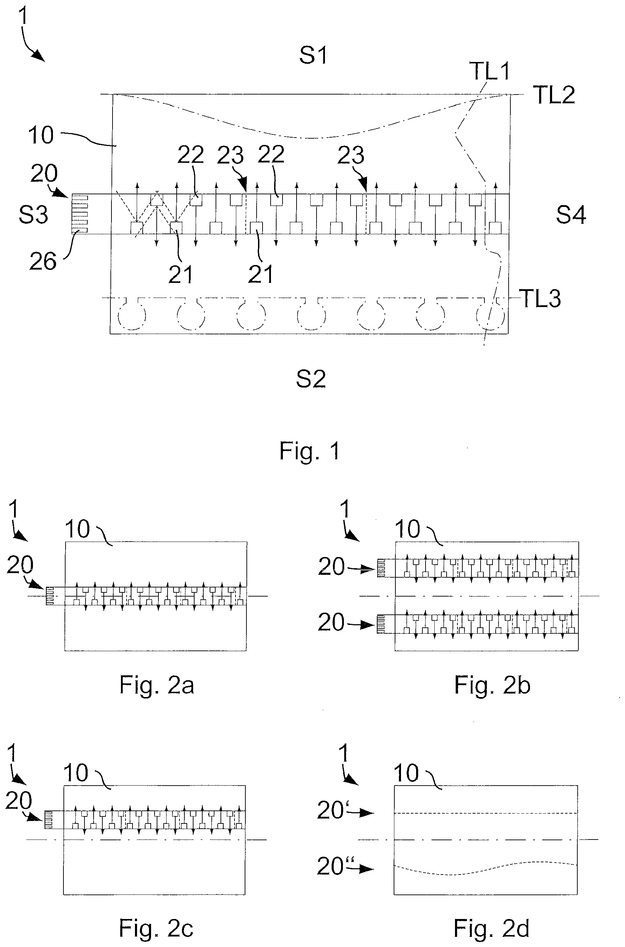

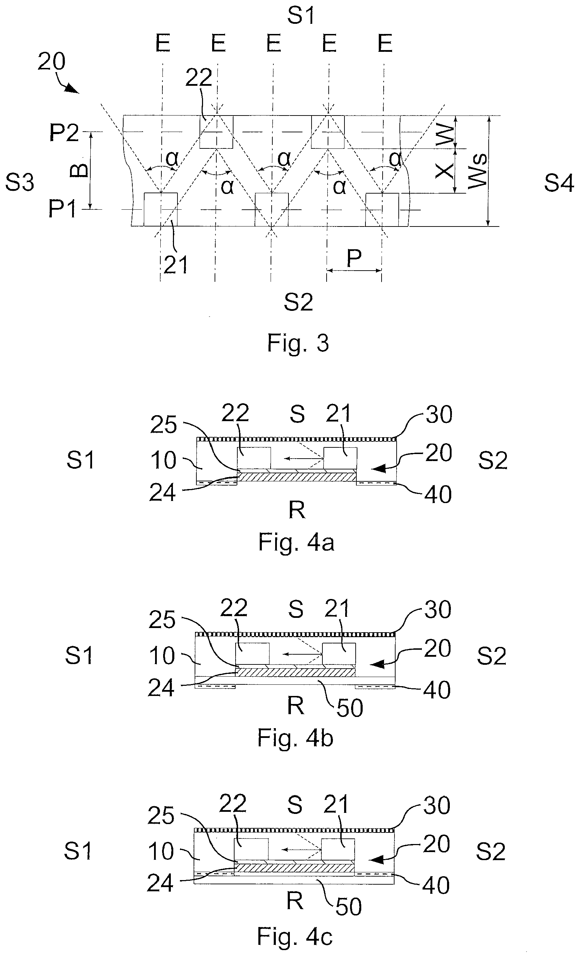

Figur 1 zeigt ein Zierteil 1 in einer Aufsicht bzw. Ansicht von oben von der Sichtseite S des Zierteils 1 aus, wobei zur besseren Übersichtlichkeit lediglich die transparente Lichtleitschicht 10 sowie ein Lichtband 20 mit teilweise zugehörigen Komponenten dargestellt sind. Weitere Lichtbänder 20 und weitere Schichten, wie beispielsweise die in den Figuren 4a bis 4c näher erläuterte Maskierungsschicht 30, Reflexionsschicht 40 und/oder zweite transparente Lichtleitschicht 50 können vorhanden sein, sind jedoch in Figur 1 nicht gezeigt.

Die Lichtleitschicht 10 erstreckt sich von einer ersten Seite S1 zu einer zweiten Seite S2 und spannt dadurch zu der Sichtseite hin eine Fläche auf, wobei ein einzelnes Lichtband 20 von einer dritten Seite S3 der Lichtleitschicht 10 zu einer vierten Seite S4 der Lichtleitschicht 10 verläuft. Die Lichtleitschicht 10 kann außerhalb des Bereichs, in welchem das Lichtband 20 angeordnet ist, frei geschnitten werden, wobei hierfür beispielhaft die Trennlinien TL1, TL2 und TL3 eingezeichnet sind. Das Lichtband 20 ist in von Trennstellen 23 unterteilte Abschnitte gegliedert, so dass das Lichtband 20 an den Trennstellen 23 geteilt werden kann. Dadurch kann ein Teil des Lichtbands 20, welcher nicht mehr von den Anschlusskontakten 26 aus mit Strom versorgbar und steuerbar ist, funktionslos werden. In Figur 1 sieht die Trennlinie TL1 vor, dass das Lichtband 20 an einer nahe dem Rand zu der vierten Seite S4 liegenden Trennstelle 23 geteilt wird, wodurch der zu der vierten Seite S4 liegende und in der Darstellungsebene rechts der Trennlinie TL1 liegende Teil des Lichtbands 20 funktionslos wird. Die Trennlinien TL1, TL2 und TL3 können bei einer alternativen Ausführung auch ineinander übergehen. Durch die freie Schneidbarkeit der Lichtleitschicht 10, welche vorzugsweise elastisch ausgebildet ist, und die Trennbarkeit des Lichtbandes 20 an den hierfür vorgesehenen Trennstellen 23 kann ein Zierteil 1 auf verschiedene Anwendungen angepasst werden, wodurch für verschiedene Anwendungen Zierteile 1 gleicher Bauart verwendet werden können, ohne die Zierteile 1 bereits bei ihrer Herstellung spezifisch auf die verschiedenen Anwendungen anzupassen. Die Zierteile 1 können bei Ihrer Herstellung somit als "Rohlinge" produziert werden, welche später durch einen spezifischen Zuschnitt auf verschiedene Einsatz- bzw. Anwendungszwecke anpassbar sind.

Ein Zierteil 1 kann zudem mit anderen Zierteilen 1 oder an einem dafür vorgesehenen Element an der Einbauposition durch eine dafür geeignete Schnittform befestigt werden. Durch einen Schnitt entlang der Trennlinie TL3 können zum Beispiel integral durch die Lichtleitschicht 10 Zungen als Verbindungselemente gebildet werden, welche in dafür vorgesehene Ausnehmung in anderen Zierteilen 1 oder dem Element an der Einbauposition eingreifen können.

Zum Anschluss des Lichtbandes 20 ragt ein Abschnitt des Lichtbandes zu der dritten Seite S3 hin aus dem Zierteil 1 hervor, wobei an dem freiliegenden, endseitigen Abschnitt Anschlusskontakte 26 vorgesehen sind, um die Leuchtmittel 21, 22 über in das Lichtband 20 integrierte Leiterbahnen mit Strom zu versorgen und zu steuern.

Um zu der Sichtseite S hin das Zierteil 1 gleichmäßig und homogen illuminieren bzw. beleuchten zu können, ist vorgesehen, dass das Lichtband 20 Leuchtmittel 21, 22 aufweist, durch welche auch das Lichtband 20 bzw. die Lichtleitschicht 10 im Bereich des Lichtbandes 20 beleuchtbar ist. Dazu weist das Lichtband 20 eine erste Vielzahl von Leuchtmitteln 21 und eine zweite Vielzahl von Leuchtmittel 22 auf, welche alternierend zueinander angeordnet sind, so dass auf ein Leuchtmittel 21 der ersten Vielzahl ein Leuchtmittel 22 der zweiten Vielzahl und umgekehrt folgt. Die Leuchtmittel 21 der ersten Vielzahl emittieren Licht seitlich in die Lichtleitschicht 10 in Richtung der ersten Seite S1 der Lichtleitschicht 10 hinein und die Leuchtmittel 22 der zweiten Vielzahl emittieren Licht seitlich in die Lichtleitschicht 10 in Richtung der zweiten Seite S2 der Lichtleitschicht 10 hinein, so dass von den Leuchtmitteln jeweils ein Teil des Lichtbandes 20 und benachbarte Leuchtmittel der jeweils anderen Vielzahl von Leuchtmitteln beleuchtet werden. Die Richtungen, in welche die Leuchtmittel 21, 22 jeweils Licht emittieren, werden durch die zu der ersten Seite S1 bzw. zweiten Seite S2 weisenden Pfeile angedeutet, wobei ein dadurch von den Leuchtmitteln 21, 22 ausgestrahlter Lichtkegel für die drei, der dritten Seite S3 am nächsten liegenden Leuchtmittel 21, 22 durch gestrichelte Linien angedeutet ist, wodurch sichtbar ist, dass das Lichtband 20 selbst in den von den Leuchtmitteln 21, 22 erzeugten Lichtkegeln liegt.

Die Figuren 2a bis 2d stellen jeweils Varianten eines Zierteils 1 aus einer Aufsicht dar.

Die Variante der Figur 2a entspricht dem Zierteil 1 aus Figur 1, bei welcher ein einzelnes Lichtband 20 symmetrisch entlang einer Mittellinie des Zierteils 1 verläuft.

In Figur 2b sind zwei Lichtbänder 20 zueinander parallel und symmetrisch zu der Mittellinie angeordnet, wobei die Leuchtkraft bzw. Lichtleistung bzw. Lichtintensität der Leuchtmittel 21, 22 in Figur 2b gegenüber der Leuchtkraft der Leuchtmittel 21, 22 aus Figur 2a reduziert sein kann, da von den einzelnen Leuchtmitteln 21, 22 des Zierteils in Figur 2b im Vergleich zu dem Zierteil 1 in Figur 2a eine weniger große Fläche beleuchtet werden muss. Alternativ kann auch das Zierteil 1 bezüglich seiner Fläche größer ausgebildet werden, so dass insgesamt eine größere Fläche beleuchtet werden muss, wobei dann die Leuchtkraft der Leuchtmittel 21, 22 darauf angepasst ist. In Figur 2b stehen Endabschnitte mit den Anschlusskontakten 26 der Lichtbänder 20 zu einer Seite hin hervor, wobei alternativ ein erster der Endabschnitte wie dargestellt und ein zweiter der Endabschnitte auf einer gegenüberliegenden Seite der Lichtleitschicht 10 hervorstehen können.

Das Lichtband 20 bzw. die Lichtbänder 20 müssen nicht symmetrisch in dem Zierteil 1 angeordnet sein, sondern können wie in Figur 3 auch asymmetrisch verteilt sein, wobei die Leuchtkraft der Leuchtmittel 21, 22 auch asymmetrisch ausgeführt sein kann, so dass beispielsweise die Leuchtmittel 22 der zweiten Vielzahl eine größere Lichtleistung aufweisen und eine größere Fläche beleuchten können.

Obgleich die Lichtbänder in den weiteren Figuren einen geradlinigen Verlauf haben, bzw. einem geradlinigen Pfad folgen, können die Lichtbänder 20, wie in Figur 2d dargestellt, alternativ zu einem geradlinigen Verlauf auch einen welligen Verlauf haben. Ein Lichtband 20 kann entsprechend entlang eines geradlinigen Pfades 20' oder auch entlang eines welligen oder gebogenen Pfades 20" verlaufen, wobei auch andere, beispielsweise gewinkelte Verläufe möglich sind.

In Figur 3 ist ein vergrößerter Ausschnitt des Lichtbandes 20 abgebildet, wie es beispielsweise in Figur 1 dargestellt ist. Die Leuchtmittel 21, 22 sind wechselseitig und ihr Licht entlang Emissionsachsen E in entgegengesetzte Richtungen emittierend angeordnet, wobei die Leuchtmittel jeweils Licht in einem Lichtkegel mit einem Abstrahlwinkel $\alpha$ entlang einer Emissionsachse E erzeugen. Die Leuchtmittel 21 der ersten Vielzahl von Leuchtmitteln sind hierzu entlang eines ersten Pfades P1 und die Leuchtmittel 22 der zweiten Vielzahl von Leuchtmitteln entlang eines zweiten Pfades P2 angeordnet, welche in Breitenrichtung, also von der ersten Seite S1 zu der zweiten Seite S2 der Lichtleitschicht 10 gesehen, einen Abstand B aufweisen, welcher entlang der gesamten Erstreckung des Lichtbandes 20 in Längsrichtung, also von der dritten Seite S3 in Richtung der vierten Seite S4, konstant ist. Die Leuchtmittel 21, 22 bzw. die Emissionsachsen E der Leuchtmittel 21, 22 weisen entlang des Lichtbandes 20 einen Versatz P zu den jeweils benachbarten Leuchtmitteln 21, 22 bzw. Emissionsachsen E auf. Ferner lässt sich aus einer Breite W der Leuchtmittel 21, 22 in Breitenrichtung des Lichtbandes 20, dem Abstrahlwinkel $\alpha$ und dem Versatz P eine vorteilhafte Breite Ws des Lichtbandes 20 ermitteln. Darüber hinaus sind aus den Maßen der Leuchtmittel 21, 22 und beispielsweise der Breite Ws des Lichtbandes 20 auch ein zur Beleuchtung des Lichtbandes 20 nötiger vorteilhafter Abstand X zwischen den Leuchtmitteln 21 der ersten Vielzahl von Leuchtmitteln und den Leuchtmitteln 22 der zweiten Vielzahl von Leuchtmitteln bestimmbar.

Vorzugsweise gilt für die Bestimmung der Breite Ws des Lichtbandes 20:

$$Ws = P/tan(\alpha/2) + W$$

Der Abstand X der Leuchtmittel 21, 22 ergibt sich bei einer vorgegeben Breite Ws des Lichtbandes folglich zu:

$$X = Ws - 2 \cdot W$$

Die Maße der Leuchtmittel 21, 22 und deren Eigenschaften, wie beispielsweise deren Abstrahlwinkel $\alpha$ wird durch die Wahl der Leuchtmittel 21, 22 beeinflusst.

Werden als Leuchtmittel 21, 22 LEDs verwendet, wird hierfür oftmals eine LED-Dichte Dp angegeben, welche die Anzahl der LEDs pro Meter angibt. Daraus kann der Versatz P zwischen den LEDs bestimmt bzw. der Versatz P bei der Berechnung der Breite Ws des Lichtbandes ersetzt werden, so dass sich für die Breite Ws des Lichtbandes 20 in Millimetern bei der Verwendung einer LED-Dichte Dp (in Metern) ergibt:

$$Ws = 1000/Dp/tan(α/2) + W$$

Die Figuren 4a bis 4c zeigen jeweils Querschnitte verschiedener Varianten von Zierteilen 1, wobei jeweils der Bereich eines Zierteils 1 um ein Lichtband 20 dargestellt ist. Die Zierteile 1 können aber jeweils auch mehrere Lichtbänder 20 umfassen oder in ihrer Breitenerstreckung von der ersten Seite S1 zu der zweiten Seite S2 breiter ausgebildet sein.

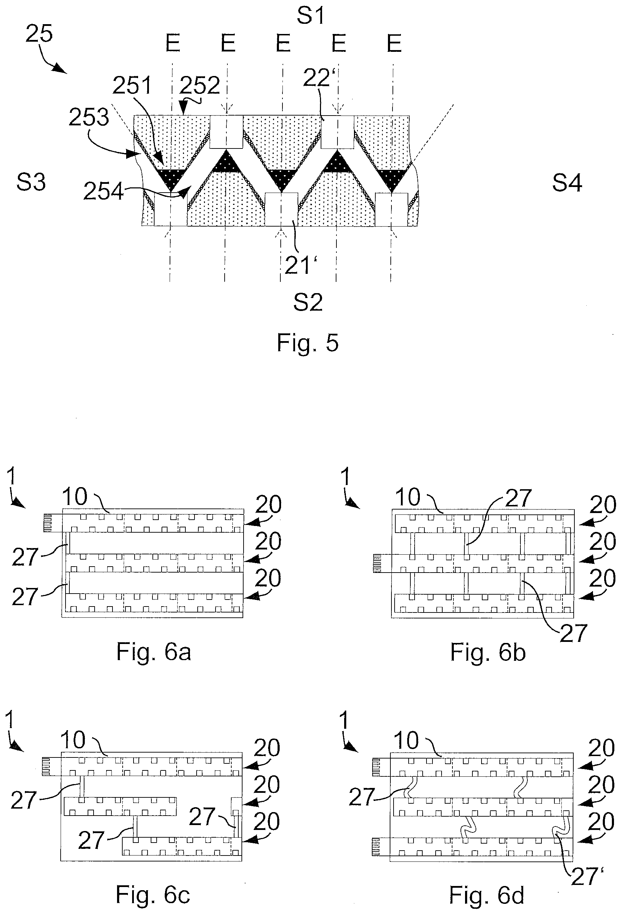

Neben der Lichtleitschicht 10 und dem Lichtband 20 umfasst das in Figur 4a illustrierte Zierteil 1 eine Maskierungsschicht 30 und eine Reflexionsschicht 40. Als Bestandteil des Lichtbandes 20 ist zudem eine Ausgleichsschicht 25 dargestellt, welche zu Figur 5 näher erläutert ist. Die Maskierungsschicht 30 ist auf der zu der Sichtseite S hin weisenden Oberseite der Lichtleitschicht 10 auf die Lichtleitschicht 10 aufgebracht und mit ihr verbunden. Die Maskierungsschicht 30 kann durch ein eigenes Material oder durch die Bearbeitung der Oberfläche der Lichtleitschicht 10 gebildet werden, welche hierzu beispielsweise mechanisch oder chemisch aufgeraut werden kann. Die Reflexionsschicht 40 ist zumindest in den Bereichen der zu der Rückseite R gewandten Unterseite der Lichtleitschicht 10 angeordnet, in welchen das Lichtband 20 nicht angeordnet ist, wobei die Reflexionsschicht 40 ausgebildet ist, das von der Lichtleitschicht 10 auf sie treffende Licht zu der Lichtleitschicht 10 bzw. zu der Sichtseite S hin zu reflektieren.

Das Zierteil 1 in Figur 4b ist grundsätzlich wie das in Figur 4a gezeigte Zierteil 1 aufgebaut, wobei zwischen der Reflexionsschicht 40 und der (ersten) Lichtleitschicht 10 eine zweite Lichtleitschicht 50 angeordnet ist, welche in dem dargestellten Beispiel die zu der Rückseite R hin weisende Unterseite der Lichtleitschicht 10 und die zu der Rückseite R hin weisende Unterseite des Lichtbandes 20 vollständig bedeckt. Durch einen von dem Brechungsindex der (ersten) Lichtleitschicht 10 abweichenden Brechungsindex, wird das auf die zweite Lichtleitschicht 50 treffende Licht abgelenkt, so dass das Licht in einem geänderten Winkel auf die Reflexionsschicht 40 trifft und in einem anderen Winkel als in dem in Figur 4a dargestellten Beispiel zu der Sichtseite S hin reflektiert wird.

Bei dem in Figur 4c gezeigten Ausführungsbeispiel ist die zweite Lichtleitschicht 50 von der Sichtseite S aus gesehen hinter der Reflexionsschicht 40 angeordnet, so dass sich insbesondere in der Kontaktebene zwischen Reflexionsschicht 40 und der zweiten Lichtleitschicht 50 die Brechungs- und Reflexionseigenschaften ändern.

Durch die Absorptionsschicht 30 wird das Licht bei allen gezeigten Varianten von der Lichtleitschicht aufgefangen bzw. absorbiert und vorzugsweise diffus und dadurch homogenisiert zu der Sichtseite hin abgegeben. Mit der Reflexionsschicht 40 und sofern vorhanden mit der zweiten Lichtleitschicht 50 kann das Licht der Leuchtmittel 21, 22 gleichmäßig und effizient von dem Lichtband 20 oder den Lichtbändern 20 über die Breite der Lichtleitschicht 10 verteilt und in die Absorptionsschicht 30 geleitet werden, so dass sich insgesamt an der Sichtseite S des Zierteils 1 eine homogene und gleichmäßige Beleuchtung des Zierteils 1 ohne "hot spots", "dark spots" oder einem "dark frame" ergibt.

In den Figuren 4a bis 4c sieht das Lichtband 20 jeweils ein Trägerband 24 vor, auf welchem die Ausgleichsschicht 25 aufgetragen und die Leuchtmittel 21, 22 angeordnet sind. Darüber hinaus sind auf dem Trägerband 24 nicht gezeigte Leiterbahnen zur elektrischen Kontaktierung der Leuchtmittel 21, 22 vorgesehen und vorzugsweise aufgedruckt, welche an der zu der Rückseite R des Zierteils gewandten Unterseite des Trägerbandes 24 und/oder zwischen dem Trägerband 24 und der Ausgleichsschicht 25 verlaufen können.

Figur 5 zeigt die Ausgleichsschicht 25 des Lichtbandes 20 im Detail. In den Bereichen 21' und 22' sind die Leuchtmittel 21, 22 anordenbar bzw. angeordnet. Die Ausgleichsschicht 25 weist um die und entlang der Emissionsachsen E der Leuchtmittel 21, 22 jeweils Abschnitte 251, 252, 253 mit unterschiedlichen Reflexionseigenschaften und/oder Absorptionseigenschaften auf, durch welche ein von dem jeweiligen Leuchtmittel 21, 22 ausgestrahltes Licht unmittelbar im Bereich des Lichtbandes 20 homogenisiert wird, so dass es insbesondere unmittelbar angrenzend an die Leuchtmittel 21, 22 oder in den Randbereichen der jeweiligen Lichtkegel nicht zu "hot spots" kommt. Insbesondere ist hierfür vorgesehen, dass die Abschnitte 251 und 253 hierfür mehr Licht reflektieren und weniger Licht absorbieren als der Abschnitt 252. Abweichend von dem dargestellten Muster, können die Abschnitte jedoch auch anders angeordnet oder deren Übergänge zueinander und zu umliegenden Bereichen schrittweise, linear oder fließend ausgebildet sein. Zur besseren Darstellbarkeit sind die Abschnitte 251, 252, 253 in Figur 5 mit scharfen Grenzen dargestellt, wobei die Abschnitte 251, 252, 253 scharfe Grenzen aufweisen können aber alternativ auch fließend ineinander übergehen können, so dass keine Grenzen zwischen den Abschnitten sichtbar sind. Die Abschnitte 251, 252 und 253 sind jeweils in Bereichen vorgesehen, in welchen durch das jeweils zugehörige Leuchtmittel 21, 22 Licht entlang der jeweiligen Emissionsachse E in einem Lichtkegel ausstrahlbar ist, wobei die Ausgleichsschicht 25 auch in den Abschnitten 254 zwischen den Lichtkegeln vorbestimmte Reflexions- und/oder Absorptionseigenschaften vorsehen kann. Ferner können die Abschnitte 254 durch eine geeignete Wahl von Leuchtmitteln 21, 22 und deren Anordnung auf dem Trägerband 24 bzw. durch eine geeignete Wahl der Breite Ws des Trägerbandes reduziert oder eliminiert werden.

Die Abschnitte 251, 252 und 253 der Ausgleichsschicht 25 können sich bis unter die angrenzenden Leuchtmittel 21, 22 erstrecken oder die Bereiche 21', 22', in welchen die Leuchtmittel 21, 22 anordenbar sind, wie in Figur 5 gezeigt aussparen bzw. freilassen.

Die Figuren 6a bis 6d zeigen jeweils eine Variante eines Zierteils 1 mit mehreren Lichtbändern 20. Um nicht für jedes Lichtband 20 einen eigenen Anschlussabschnitt mit Anschlusskontakten 26 vorsehen zu müssen und ein Zierteil 1 mit mehreren Lichtbändern 20 freier zuschneidbar zu gestalten, ist zudem vorzugsweise vorgesehen, dass die benachbarte Lichtbänder 20 durch Brückenleitungen 27 elektrisch miteinander verbunden sind. Hierzu kann wie in Figur 6a lediglich eine Brückenleitung 27 vorgesehen sein, welche zwei unmittelbar benachbarte Lichtbänder 20 verbindet. Alternativ ist es auch möglich wie in Figur 6b jeweils eine Brückenleitung 27 für jeden durch eine Trennstelle 23 trennbaren Abschnitt vorzusehen, wodurch beispielsweise ein Abschnitt aus einem Lichtband 20 herausgetrennt werden kann, ohne die Funktionalität der verbleibenden Abschnitte zu stören. Ferner können durch die Lichtbänder 20, wie in Figur 6c Freiräume in der Lichtleitschicht 10 gebildet werden, wobei die verteilten Lichtbänder 20 durch Brückenleitungen 27 miteinander kontaktiert sind. In die so gebildeten Freiräume können Durchbrüche eingebracht werden, so dass das Zierteil 1 beispielsweise um ein Element angeordnet werden kann, welches das Zierteil 1 durchläuft.

Die Brückenleitungen 27 können zudem, wie in Figur 6d, auch wellig, gebogen oder schräg verlaufen und müssen nicht geradlinig und orthogonal zu den Lichtbändern sein. Ferner können wie in Figur 6d mehrere Anschlusskontakte 26 aufweisende Lichtbänder 20 vorgesehen sein.

**Patentansprüche**

1. Beleuchtbares Zierteil (1) mit einer Sichtseite (S) und einer der Sichtseite (S) gegenüberliegenden Rückseite (R), wobei

    das Zierteil (1) eine transparente Lichtleitschicht (10) sowie zumindest ein Lichtband (20) umfasst, wobei
    sich die Lichtleitschicht (10) flächig von einer ersten Seite (S1) zu einer gegenüberliegenden zweiten Seite (S2) erstreckt und
    sich das zumindest eine Lichtband (20) zwischen der ersten Seite (S1) und der zweiten Seite (S2) von einer dritten Seite (S3) zu einer gegenüberliegenden vierten Seite (S4) der Lichtleitschicht (10) erstreckt sowie jeweils eine erste Vielzahl von Leuchtmitteln und eine zweite Vielzahl von Leuchtmitteln aufweist, wobei
    die Leuchtmittel (21) der ersten Vielzahl von Leuchtmitteln ausgebildet sind, Licht in Richtung der ersten Seite (S1) der Lichtleitschicht (10) zu emittieren, und die Leuchtmittel (22) der zweiten Vielzahl von Leuchtmitteln ausgebildet sind, Licht in Richtung der zweiten Seite (S2) der Lichtleitschicht (10) zu emittieren, sowie das Lichtband (20) an einer zu der Rückseite (R) des Zierteils (1) weisenden Unterseite der Lichtleitschicht (10) angeordnet ist und sich zumindest mit den Leuchtmitteln (21, 22) zu der Sichtseite (S) des Zierteils (1) hin in die Lichtleitschicht (10) erstreckt,
    **dadurch gekennzeichnet, dass** die Leuchtmittel (21) der ersten Vielzahl von Leuchtmitteln jeweils zumindest teilweise in einem Lichtkegel des von einem der Leuchtmittel (22) der zweiten Vielzahl von Leuchtmitteln in Richtung der zweiten Seite (S2) emittierbaren Lichts und die Leuchtmittel (22) der zweiten Vielzahl von Leuchtmitteln jeweils zumindest teilweise in einem Lichtkegel des von einem der Leuchtmittel (21) der ersten Vielzahl von Leuchtmitteln in Richtung der ersten Seite (S1) emittierbaren Lichts angeordnet sind.

2. Zierteil gemäß Anspruch 1, wobei

    die Leuchtmittel (21, 22) der ersten und der zweiten Vielzahl von Leuchtmittel alternierend zueinander angeordnet sind, so dass entlang des Lichtbandes (20) von der dritten Seite (S3) zu der vierten Seite (S4) der Lichtleitschicht (10) auf ein Leuchtmittel (21) der ersten Vielzahl von Leuchtmitteln jeweils ein Leuchtmittel (22) der zweiten Vielzahl von Leuchtmitteln und umgekehrt folgt, und wobei
    die Leuchtmittel (21) der ersten Vielzahl von Leuchtmitteln entlang eines ersten Pfades (P1) und die Leuchtmittel (22) der zweiten Vielzahl von Leuchtmitteln entlang eines zweiten Pfades (P2) angeordnet sind, welche entlang ihrer gesamten Erstreckung zueinander beabstandet sind.

3. Zierteil gemäß Anspruch 1 oder 2, wobei die Lichtleitschicht (10) elastisch ist.

4. Zierteil nach einem der vorhergehenden Ansprüche, wobei
das Lichtband (20) in eine Vielzahl von an vorbestimmten Trennstellen (23) voneinander trennbaren Abschnitten unterteilt ist, welche jeweils einen vorbestimmten Teil der Leuchtmittel (21, 22) der ersten Vielzahl von Leuchtmitteln und der zweiten Vielzahl von Leuchtmitteln aufweisen.

5. Zierteil nach einem der vorhergehenden Ansprüche, wobei

    das Lichtband (20) ein Trägerband (24) aufweist, auf welchem die Leuchtmittel (21, 22) angeordnet und elektrisch kontaktiert sind, und wobei
    das Trägerband (24) elastisch ist.

**6.** Zierteil nach einem der vorhergehenden Ansprüche, wobei

die Leuchtmittel (21, 22) jeweils aus mehreren LEDs gebildet oder eine LED sind.

**7.** Zierteil nach einem der vorhergehenden Ansprüche, wobei

das Lichtband (20) eine Ausgleichsschicht (25) zur Homogenisierung der Lichtintensität des durch die Leuchtmittel (21, 22) emittierten Lichts aufweist, wobei
die Ausgleichsschicht (25) in den Bereichen der Lichtkegel der Leuchtmittel (21, 22) der ersten und zweiten Vielzahl von Leuchtmitteln jeweils Abschnitte (251, 252, 253) mit unterschiedlichen Reflexionseigenschaften und/oder Absorptionseigenschaften vorsieht.

**8.** Zierteil nach dem vorhergehenden Anspruch, wobei

jeder von jedem der Leuchtmittel (21, 22) emittierbare Lichtkegel um eine Emissionsachse (E) des jeweiligen Leuchtmittels symmetrisch ist und
ein einem Leuchtmittel (21, 22) zugeordneter Bereich der Ausgleichsschicht (25) seine Dichte und/oder Farbe von der Emissionsachse (E) zu außenliegenden Rändern des jeweiligen Lichtkegels variiert, so dass der Bereich der Ausgleichsschicht (25) von der Emissionsachse (E) zu seinem Rand hin weniger durch das Leuchtmittel (21, 22) emittiertes Licht absorbiert und/oder mehr reflektiert.

**9.** Zierteil nach einem der beiden vorhergehenden Ansprüche, wobei

jeder von jedem der Leuchtmittel (21, 22) emittierbare Lichtkegel entlang einer Emissionsachse (E) des jeweiligen Leuchtmittels (21, 22) ausgestrahlt wird und
ein einem Leuchtmittel (21, 22) zugeordneter Bereich der Ausgleichsschicht (25) bezüglich seiner Dichte und/oder Farbe entlang der Emissionsachse (E) variiert, so dass die Ausgleichsschicht (25) unmittelbar angrenzend an das Leuchtmittel (21, 22) entlang der Emissionsachse zu einem von dem Leuchtmittel (21, 22) beabstandeten Bereich der Ausgleichsschicht (25) weniger durch das Leuchtmittel (21, 22) emittiertes Licht absorbiert und/oder mehr reflektiert.

**10.** Zierteil nach einem der vorhergehenden Ansprüche, ferner aufweisend eine Maskierungsschicht (30), die auf einer zu der Sichtseite (S) des Zierteils (1) weisenden Oberseite der Lichtleitschicht (10) an der Lichtleitschicht (10) angeordnet und mit ihr verbunden ist, wobei
die Maskierungsschicht (30) ausgebildet ist, von der Lichtleitschicht (10) auf die Maskierungsschicht (30) treffendes Licht zu absorbieren und zu der Sichtseite (S) des Zierteils (1) hin zu homogenisieren, so dass das Zierteil (1) von seiner Sichtseite (S) aus durch das von der Lichtleitschicht (10) auf die Maskierungsschicht (30) treffende Licht homogen beleuchtbar ist.

**11.** Zierteil nach einem der vorhergehenden Ansprüche, ferner aufweisend eine Reflexionsschicht (40), wobei

die Reflexionsschicht (40) an einer zu der Rückseite (R) des Zierteils (1) weisenden Unterseite der Lichtleitschicht (10) angeordnet ist und
die Reflexionsschicht (40) ausgebildet ist, ein aus der Lichtleitschicht (10) auf sie treffendes Licht zu der Sichtseite (S) des Zierteils (1) hin zu reflektieren.

**12.** Zierteil nach einem der vorhergehenden Ansprüche, ferner aufweisend eine zweite transparente Lichtleitschicht (50), mit einem sich von einem Brechungsindex der transparenten Lichtleitschicht (10) unterscheidenden Brechungsindex, wobei die zweite transparente Lichtleitschicht (50) an einer zu der Rückseite (R) des Zierteils (1) weisenden Unterseite der Lichtleitschicht (10) angeordnet ist.

**13.** Zierteil nach einem der vorhergehenden Ansprüche, wobei
an einem zu der dritten Seite (S3) oder vierten Seite (S4) der Lichtleitschicht (10) weisenden Endabschnitt des Lichtbandes (20) oder einer zu einer Rückseite (R) des Zierteils (1) weisenden Unterseite des Lichtbandes (20) elektrische Anschlusskontakte (26) zur elektrischen Versorgung und Steuerung der Leuchtmittel (21, 22) der ersten und zweiten Vielzahl von Leuchtmitteln des Lichtbandes (20) vorgesehen sind.

**14.** Zierteil nach dem vorhergehenden Anspruch, wobei der zu der dritten Seite (S3) oder vierten Seite (S4) der Lichtleitschicht (10) weisende Endabschnitt des Lichtbandes (20) zu der dritten Seite (S3) oder vierten Seite (S4) hin aus der Lichtleitschicht (10) hervorsteht.

**15.** Zierteil nach einem der vorhergehenden Ansprüche, aufweisend eine Vielzahl von Lichtbändern (20), wobei
jeweils zumindest zwei Lichtbänder (20) der Vielzahl von Lichtbändern über zumindest eine zwischen den Lichtleitbändern (20) verlaufende Brückenleitung (27) elektrisch miteinander verbunden sind, so dass die Leuchtmittel (21, 22) der jeweils zumindest zwei Lichtbänder (20) gemeinsam elektrisch versorgbar und steuerbar sind.

## Claims

1. An illuminable decorative part (1), having a visible side (S) and a rear side (R) opposite the visible side (S), wherein

   the decorative part (1) comprises a transparent light-guiding layer (10) and at least one light strip (20), wherein
   the light-guiding layer (10) extends from a first side (S1) to an opposite second side (S2) in a planar manner, and
   the at least one light strip (20) extends between the first side (S1) and the second side (S2) from a third side (S3) to an opposite fourth side (S4) of the light-guiding layer (10), and has each of a first plurality of lighting means and a second plurality of lighting means, wherein
   the lighting means (21) of the first plurality of lighting means are configured to emit light in the direction of the first side (S1) of the light-guiding layer (10), and the lighting means (22) of the second plurality of lighting means are configured to emit light in the direction of the second side (S2) of the light-guiding layer (10), and
   the light strip (20) is disposed on a lower side of the light-guiding layer (10) facing the rear side (R) of the decorative part (1) and extends, at least with the lighting means (21, 22), towards the visible side (S) of the decorative part (1) into the light-guiding layer (10),
   **characterized in that** the lighting means (21) of the first plurality of lighting means are each disposed at least partially in a light cone of the light emittable by one of the lighting means (22) of the second plurality of lighting means in the direction of the second side (S2), and the lighting means (22) of the second plurality of lighting means are each disposed at least partially in a light cone of the light emittable by one of the lighting means (21) of the first plurality of lighting means in the direction of the first side (S1).

2. The decorative part according to claim 1, wherein

   the lighting means (21, 22) of the first and second pluralities of lighting means are disposed alternately to one another, so that, along the light strip (20) from the third side (S3) to the fourth side (S4) of the light-guiding layer (10), each lighting means (21) of the first plurality of lighting means is followed by a lighting means (22) of the second plurality of lighting means, and vice versa, and wherein

   the lighting means (21) of the first plurality of lighting means are disposed along a first path (P1), and the lighting means (22) of the second plurality of lighting means are disposed along a second path (P2), which are spaced from one another along their entire extension.

3. The decorative part according to claim 1 or 2, wherein
   the light-guiding layer (10) is elastic.

4. The decorative part according to any one of the preceding claims, wherein
   the light strip (20) is subdivided into a plurality of sections which are separable from one another at predetermined separation points (23), each of which has a predetermined portion of the lighting means (21, 22) of the first plurality of lighting means and the second plurality of lighting means.

5. The decorative part according to any one of the preceding claims, wherein

   the light strip (20) has a carrier strip (24) on which the lighting means (21, 22) are disposed and electrically contacted, and wherein
   the carrier strip (24) is elastic.

6. The decorative part according to any one of the preceding claims, wherein
   the lighting means (21, 22) are each formed from multiple LEDs or are one LED.

7. The decorative part according to any one of the preceding claims, wherein

   the light strip (20) has a compensating layer (25) for homogenizing the light intensity of the light emitted by the lighting means (21, 22), wherein the compensating layer (25) provides sections (251, 252, 253) of different reflection properties and/or absorption properties in the areas of the light cones of the lighting means (21, 22) of the first and second pluralities of lighting means, respectively.

8. The decorative part according to the preceding claim, wherein

   each light cone emittable by each of the lighting means (21, 22) is symmetrical about an emission axis (E) of the respective lighting means, and
   an area of the compensating layer (25) associated with a lighting means (21, 22) varies its density and/or color from the emission axis (E) to outer edges of the respective light cone, so that the area of the compensating layer (25) absorbs less and/or reflects more light emitted by the lighting means (21, 22) from the emission axis (E) to its edge.

9. The decorative part according to any one of the two preceding claims, wherein

    each light cone emittable by each of the lighting means (21, 22) is emanated along an emission axis (E) of the respective lighting means (21, 22), and
    an area of the compensating layer (25) associated with a lighting means (21, 22) varies with respect to its density and/or color along the emission axis (E), so that the compensating layer (25) immediately adjacent to the lighting means (21, 22) absorbs less and/or reflects more light emitted by the lighting means (21, 22) along the emission axis to an area of the compensating layer (25) spaced apart from the lighting means (21, 22).

10. The decorative part according to any one of the preceding claims, further having a masking layer (30), which is disposed and connected on and to the light-guiding layer (10) on an upper side of the light-guiding layer (10) facing the visible side (S) of the decorative part (1), wherein
    the masking layer (30) is configured to absorb light incident on the masking layer (30) from the light-guiding layer (10) and to homogenize it towards the visible side (S) of the decorative part (1), so that the decorative part (1) is homogeneously illuminable from its visible side (S) by the light incident on the masking layer (30) from the light-guiding layer (10).

11. The decorative part according to any one of the preceding claims, further having a reflective layer (40), wherein

    the reflective layer (40) is disposed on a lower side of the light-guiding layer (10) facing the rear side (R) of the decorative part (1), and
    the reflective layer (40) is configured to reflect a light incident thereon from the light-guiding layer (10) towards the visible side (S) of the decorative part (1).

12. The decorative part according to any one of the preceding claims, further having a second transparent light-guiding layer (50) with a refractive index that differs from the refractive index of the transparent light-guiding layer (10), wherein the second transparent light-guiding layer (50) is disposed on a lower side of the light-guiding layer (10) facing the rear side (R) of the decorative part (1).

13. The decorative part according to any one of the preceding claims, wherein electrical terminal contacts (26) are provided on an end section of the light strip (20) facing the third side (S3) or fourth side (S4) of the light-guiding layer (10) or on a lower side of the light strip (20) facing a rear side (R) of the decorative part (1) for electrical supply and control of the lighting means (21, 22) of the first and second pluralities of lighting means of the light strip (20).

14. The decorative part according to the preceding claim, wherein
    the end section of the light strip (20) facing the third side (S3) or fourth side (S4) of the light-guiding layer (10) protrudes from the light-guiding layer (10) towards the third side (S3) or fourth side (S4).

15. The decorative part according to any one of the preceding claims, having a plurality of light strips (20), wherein
    at least two light strips (20) of the plurality of light strips are each electrically connected to one another via at least one bridge line (27) running between the light-guiding strips (20), so that the lighting means (21, 22) of the at least two light strips (20) are each able to be electrically supplied and controlled together.

**Revendications**

1. Pièce décorative (1) pouvant être éclairée, présentant une face visible (S) et une face arrière (R) à l'opposé de la face visible (S), dans laquelle

    la pièce décorative (1) comprend une couche transparente de guidage de lumière (10) ainsi qu'au moins une bande lumineuse (20), dans laquelle
    la couche de guidage de lumière (10) s'étend de manière plane d'une première face (S1) à une deuxième face (S) opposée, et
    ladite au moins une bande lumineuse (20) s'étend entre la première face (S1) et la deuxième face (S2) d'une troisième face (S3) à une quatrième face (S4) opposée de la couche de guidage de lumière (10), et présente respectivement une première pluralité de sources lumineuses et une deuxième pluralité de sources lumineuses, dans laquelle
    les sources lumineuses (21) de la première pluralité de sources lumineuses sont réalisées pour émettre de la lumière en direction de la première face (S1) de la couche de guidage de lumière (10), et les sources lumineuses (22) de la deuxième pluralité de sources lumineuses sont réalisées pour émettre de la lumière en direction de la deuxième face (S2) de la couche de guidage de lumière (10), et

la bande lumineuse (20) est disposée sur une face inférieure, tournée vers la face arrière (R) de la pièce décorative (1), de la couche de guidage de lumière (10), et s'étend au moins avec les sources lumineuses (21, 22) en direction de la face visible (S) de la pièce décorative (1) dans la couche de guidage de lumière (10), **caractérisée en ce que** les sources lumineuses (21) de la première pluralité de sources lumineuses sont respectivement disposées au moins partiellement dans un cône de lumière de la lumière pouvant être émise par l'une des sources lumineuses (22) de la deuxième pluralité de sources lumineuses en direction de la deuxième face (S2), et les sources lumineuses (22) de la deuxième pluralité de sources lumineuses sont disposées respectivement au moins partiellement dans un cône de lumière de la lumière pouvant être émise par l'une des sources lumineuses (21) de la première pluralité de sources lumineuses en direction de la première face (S1).

2. Pièce décorative selon la revendication 1, dans laquelle

les sources lumineuses (21, 22) de la première et de la deuxième pluralité de sources lumineuses sont disposées en alternance les unes avec les autres de sorte que le long de la bande lumineuse (20), de la troisième face (S3) à la quatrième face (S4) de la couche de guidage de lumière (10), une source lumineuse (21) de la première pluralité de sources lumineuses est respectivement suivie d'une source lumineuse (22) de la deuxième pluralité de sources lumineuses, et vice versa, et dans laquelle les sources lumineuses (21) de la première pluralité de sources lumineuses sont disposées le long d'un premier chemin (P1), et les sources lumineuses (22) de la deuxième pluralité de sources lumineuses sont disposées le long d'un deuxième chemin (P2), lesdits chemins étant espacés l'un de l'autre sur toute leur étendue.

3. Pièce décorative selon la revendication 1 ou 2, dans laquelle la couche de guidage de lumière (10) est élastique.

4. Pièce décorative selon l'une quelconque des revendications précédentes, dans laquelle la bande lumineuse (20) est divisée en une pluralité de tronçons pouvant être séparés les uns des autres au niveau de points de séparation (23) prédéterminés et qui présentent respectivement une partie prédéterminée des sources lumineuses (21, 22) de la première pluralité de sources lumineuses et de la deuxième pluralité de sources lumineuses.

5. Pièce décorative selon l'une quelconque des revendications précédentes, dans laquelle

la bande lumineuse (20) présente une bande de support (24) sur laquelle les sources lumineuses (21, 22) sont disposées et mises en contact électrique, et dans laquelle la bande de support (24) est élastique.

6. Pièce décorative selon l'une quelconque des revendications précédentes, dans laquelle les sources lumineuses (21, 22) sont respectivement formées à partir de plusieurs LED ou sont une LED.

7. Pièce décorative selon l'une quelconque des revendications précédentes, dans laquelle

la bande lumineuse (20) présente une couche de compensation (25) pour homogénéiser l'intensité de lumière de la lumière émise par les sources lumineuses (21, 22), dans laquelle la couche de compensation (25) prévoit dans les zones du cône de lumière des sources lumineuses (21, 22) de la première et de la deuxième pluralité de sources lumineuses respectivement des tronçons (251, 252, 254) ayant des propriétés de réflexion et/ou des propriétés d'absorption différentes.

8. Pièce décorative selon la revendication précédente, dans laquelle

chaque cône de lumière pouvant être émis par chacune des sources lumineuses (21, 22) est symétrique autour d'un axe d'émission (E) de la source lumineuse respective, et une zone de la couche de compensation (25), associée à une source lumineuse (21, 22), fait varier sa densité et/ou sa couleur allant de l'axe d'émission (E) jusqu'aux bords externes du cône de lumière respectif de sorte que la zone de la couche de compensation (25) absorbe moins de lumière émise par la source lumineuse (21, 22) et/ou en réfléchit plus de l'axe d'émission (E) vers son bord.

9. Pièce décorative selon l'une des deux revendications précédentes, dans laquelle

chaque cône de lumière pouvant être émis par chacune des sources lumineuses (21, 22) est rayonné le long d'un axe d'émission (E) de la source lumineuse (21, 22) respective, et une zone de la couche de compensation (25), associée à une source lumineuse (21, 22), varie en termes de densité et/ou de couleur le long de l'axe d'émission (E) de sorte que la couche de compensation (25), de manière directement adjacente à la source lumineuse (21, 22) le long de l'axe d'émission jusqu'à une zone de la couche de compensation (25), espacée de la source lumineuse (21, 22), absorbe moins de lumière émise par la source lumineuse (21, 22) et/ou en réfléchit plus.

10. Pièce décorative selon l'une quelconque des revendications précédentes, présentant en outre une couche de masquage (30) qui est disposée sur une face supérieure de la couche de guidage de lumière (10), tournée vers la face visible (S) de la pièce décorative (1), au niveau de la couche de guidage de lumière (10) et est reliée à celle-ci, dans laquelle
la couche de masquage (30) est réalisée pour absorber la lumière incidente de la couche de guidage de lumière (10) sur la couche de masquage (30) et pour l'homogénéiser en direction de la face visible (S) de la pièce décorative (1) de sorte que la pièce décorative (1) peut être éclairée de manière homogène à partir de sa face visible (S) par la lumière provenant de la couche de guidage de lumière (10) incidente sur la couche de masquage (30).

11. Pièce décorative selon l'une quelconque des revendications précédentes, présentant en outre une couche de réflexion (40), dans laquelle

la couche de réflexion (40) est disposée sur une face inférieure de la couche de guidage de lumière (10), tournée vers la face arrière (R) de la pièce décorative (1), et
la couche de réflexion (40) est réalisée pour réfléchir une lumière incidente sur celle-ci en provenance de la couche de guidage de lumière (10) vers la face visible (S) de la pièce décorative (1).

12. Pièce décorative selon l'une quelconque des revendications précédentes, présentant en outre une deuxième couche transparente de guidage de lumière (50) ayant un indice de réfraction différent d'un indice de réfraction de la couche transparente de guidage de lumière (10), dans laquelle la deuxième couche transparente de guidage de lumière (50) est disposée sur une face inférieure de la couche de guidage de lumière (10), tournée vers la face arrière (R) de la pièce décorative (1).

13. Pièce décorative selon l'une quelconque des revendications précédentes, dans laquelle
au niveau d'une section d'extrémité de la bande lumineuse (20), tournée vers la troisième face (S3) ou la quatrième face (S4) de la couche de guidage de lumière (10), ou d'une face inférieure de la bande lumineuse (20), tournée vers une face arrière (R) de la pièce décorative (1), des contacts de connexion électrique (26) sont prévus pour l'alimentation électrique et la commande des sources lumineuses (21, 22) de la première et de la deuxième pluralité de sources lumineuses de la bande lumineuse (20).

14. Pièce décorative selon la revendication précédente, dans laquelle
la section d'extrémité de la bande lumineuse (20), tournée vers la troisième face (S3) ou la quatrième face (S4) de la couche de guidage de lumière (10), fait saillie à partir de la couche de guidage de lumière (10) vers la troisième face (S3) ou la quatrième face (S4).

15. Pièce décorative selon l'une quelconque des revendications précédentes, présentant une pluralité de bandes lumineuses (20), dans laquelle
respectivement au moins deux bandes lumineuses (20) de la pluralité de bandes lumineuses sont reliées l'une à l'autre électriquement par au moins une ligne de pontage (27) s'étendant entre bandes de guidage de lumière (20) de sorte que les sources lumineuses (21, 22) des au moins deux bandes lumineuses (20) respectivement peuvent ensemble être alimentées électriquement et commandées.

Fig. 1

Fig. 2a

Fig. 2b

Fig. 2c

Fig. 2d

Fig. 3

Fig. 4a

Fig. 4b

Fig. 4c

25

251 252 22'
253
S3
254
S1
E E E E E

S4

21'

S2

Fig. 5

1
10
27
27
20
20
20

Fig. 6a

1
10 27
20
20
20
27

Fig. 6b

1
10
27
27
20
20
27
20

Fig. 6c

1
10
27
20
20
20
27'

Fig. 6d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011156067 A1
- US 2014307434 A1
- US 2018017231 A1
- US 2011063838 A1
- DE 10343878 A1
- US 2009244902 A1